# EUROPÄISCHE PATENTSCHRIFT

(11) **EP 3 666 381 B1**
(45) Veröffentlichungstag und Bekanntmachung des Hinweises auf die Patenterteilung: **09.02.2022**
(21) Anmeldenummer: 18212806.6
(22) Anmeldetag: 14.12.2018
(51) Int. Cl.: B01L 9/00, G01N 35/00, G01N 35/10

(54) **LABORAUTOMAT ZUR AUTOMATISCHEN BEHANDLUNG VON LABORPROBEN**
LABORATORY DEVICE FOR AUTOMATIC TREATMENT OF LABORATORY SAMPLES
APPAREIL AUTOMATIQUE DE LABORATOIRE DESTINÉ AU TRAITEMENT AUTOMATIQUE DES ÉCHANTILLONS DE LABORATOIRE

(43) Veröffentlichungstag der Anmeldung: 17.06.2020
(73) Patentinhaber: Eppendorf AG, 22339 Hamburg (DE)
(72) Erfinder: KROOG, Jens-Peter, 22339 Hamburg (DE)
(74) Vertreter: Hauck Patentanwaltspartnerschaft mbB

(56) Entgegenhaltungen:
- EP-A2- 1 366 822
- CN-A- 108 970 664
- DE-B4-102009 006 511
- JP-U- S5 958 032
- US-A1- 2009 293 643

## Beschreibung

Die Erfindung betrifft einen Laborautomaten zur automatischen Behandlung von Laborproben.

Laborautomaten werden insbesondere in biologischen, biochemischen, medizinischen, forensischen oder chemischen Laboratorien zur Behandlung von zumeist flüssigen Laborproben verwendet. Zu den Behandlungen gehören insbesondere das Dosieren, Mischen, Aufteilen, Verdünnen, Temperieren, biochemische oder chemische Verändern oder Analysieren von Proben. Hierbei können die Proben in ihrer Menge, Zusammensetzung, physikalisch, biochemisch, chemisch oder auf andere Weise verändert werden. Laborautomaten werden insbesondere für das Erstellen von Verdünnungsreihen, die Reagenzienverteilung, den Probentransfer von Gefäßen auf Platten, die Probennormalisierung, den PCR-Set-up, die Real-Time-PCR, die Nukleinsäureaufreinigung über Magnetic-Bead-Methoden, die Probenvorbereitung für das Next-Generation-Sequencing und das Verarbeiten von Zell-Essays oder Routinepipettierungen verwendet. Die automatische Behandlung der Proben ist schneller, genauer und zuverlässiger als die manuelle. Ein Laborautomat und ein Verfahren zur Behandlung von Laborproben sind in der EP 2 713 166 A1 beschrieben.

Die Laborautomaten epMotion^{®} 5070, 5073, 5075 der Eppendorf AG haben einen Arbeitsbereich mit Arbeitsplätzen für Laborartikel und Lagerplätzen für Greifer- und Pipettierwerkzeuge. In den Laborartikeln können Proben gelagert und behandelt werden. Die Laborartikel sind beispielsweise Reagenzgefäße, Reaktionsgefäße, Reservoirs, Mikrotiterplatten (Mikrotestplatten), Pipettenspitzen und Abfallbehälter. Laborartikel werden direkt auf Arbeitsplätze aufgesetzt oder in Lagervorrichtungen auf den Arbeitsplätzen gelagert. Diese sind beispielsweise Pipettenspitzenträger, Halter für Pipettenspitzenträger, Gestelle (Racks) für Reservoire oder Gefäße und Adapter für die Höheneinstellung von Mikrotiterplatten. Ein Träger für Pipettenspitzen umfassend einen Pipettenspitzenhalter und einen Pipettenspitzenträger ist in der DE 10 2009 006 511 B4 beschrieben. Ein modulares Aufbewahrungssystem für Labor-Flüssigkeiten ist in der EP 2 168 684 B1 beschrieben.

Darüber hinaus weisen die Laborautomaten einen X-, Y-, Z-Roboterarm mit einen Werkzeughalter auf, mit dem wahlweise ein Greiferwerkzeug und ein Pipettierwerkzeug verbindbar ist. Ein Greiferwerkzeug, ein Pipettierwerkzeug und ein Werkzeughalter für einen Laborautomaten sind in der EP 1 407 861 B1 beschrieben. Der Roboterarm ist programmgesteuert bewegbar, um ein Greifer- oder Pipettierwerkzeug von einem Lagerplatz aufzunehmen oder darauf abzusetzen, im Arbeitsbereich mittels des Greiferwerkzeuges Laborartikel zu verlagern und mittels des Pipettierwerkzeuges Pipettenspitzen aufzunehmen und abzugeben und mittels der Pipettenspitzen Flüssigkeiten aufzunehmen und abzugeben.

Die Pipettierwerkzeuge haben mindestens einen Zapfen, auf den abdichtend eine Pipettenspitze aufklemmbar ist. Mittels einer im Pipettierwerkzeug angeordneten Verdrängungseinrichtung, die über eine Leitung mit einem Loch im Zapfen verbunden ist, kann Luft durch eine obere Öffnung der Pipettenspitze hindurch verdrängt werden, um Flüssigkeit durch eine untere Öffnung der Pipettenspitze hindurch einzusaugen oder auszustoßen. Bei einem Mehrfach-Pipettierwerkzeug sind die Zapfen zum Aufklemmen von Pipettenspitzen in einer oder mehreren Reihen entsprechend zumindest einem Teil der Näpfchen (*wells*) in einer standardisirten Mikrotiterplatte angeordnet. Verwendet werden insbesondere standardisierte Mikrotiterplatten mit 96 oder 384 Näpfchen an den Abstand der Näpfchen angepasste Mehrfach-Pipettierwerkzeuge. Die Pipettenspitzen aus Kunststoff können nach einmaligem Gebrauch von dem Pipettierwerkzeug getrennt und in einen Abfallbehälter abgeworfen werden, um beim Dosieren unterschiedlicher Laborproben Kreuzkontaminationen zu vermeiden.

Die Arbeitsplätze haben ein an die Grundfläche einer standardisierten Mikrotiterplatte angepasstes, rechteckiges Format (SBS/ANSI-Format), um darauf standardisierte Mikrotiterplatten, Pipettenspitzenträger oder andere Laborartikel mit einer Grundfläche, die mit der Grundfläche einer standardisierten Mikrotiterplatte übereinstimmt, zu lagern. Die Grundflächen der Arbeitsplätze sind durch Ausrichtmittel begrenzt, die eine genaue Ausrichtung der Laborartikel sicherstellen.

Die Pipettenspitzenträger halten eine Vielzahl Pipettenspitzen in Löchern, die entsprechend den Näpfchen einer standardisierten Mikrotiterplatte angeordnet sind. Mittels eines Mehrfach-Pipettierwerkzeuges, das mehrere Pipettenspitzen in einer Anordnung hält, die der Anordnung eines Teils oder sämtlicher Näpfchen einer standardisierten Mikrotiterplatte entspricht, sind eine Vielzahl Pipettenspitzen gleichzeitig aus einem Pipettenspitzenträger aufnehmbar und Flüssigkeiten gleichzeitig in eine Vielzahl Näpfchen einer Mikrotiterplatte abgebbar oder daraus aufnehmbar.

Für das Behandeln vom Laborproben wird vielfach eine große Anzahl Pipettenspitzen in mehreren Pipettenspitzenträgern benötigt, die auf den Arbeitsplätzen des Laborautomaten bereitgestellt werden müssen. Die Laborautomaten epMotion^{®} 5070, 5073 und 5075 haben vier, sechs und 12 bis 15 Arbeitsplätze. Die zum Aufstellen der Laborautomaten benötigte Stellfläche wächst mit der Anzahl der Arbeitsplätze.

Ferner sind Laborautomaten bekannt, die an einer Seite ein Magazin und eine Zuführeinrichtung für Pipettenspitzenträger aufweisen, in denen Pipettenspitzen gehalten sind. Diese zusätzlichen Einrichtungen vergrößern die Stellfläche des Laborautomaten. Stellfläche ist im Labor vielfach knapp.

Die US 2009/293643 A1 beschreibt einen Laborautomaten zur automatischen Behandlung von Laborproben umfassend einen Arbeitsbereich mit Arbeitsplätzen für Laborartikel, einen Roboterarm zum Verlagern von Laborartikeln im Arbeitsbereich, einen im Arbeitsbereich bewegbaren Pipettierkopf und einen Halter für Pipettenspitzen.

Die CN 108970664 A beschreibt eine Einrichtung zum Übertragen von Pipettenspitzen, die auf einem Halter eine Magazinbox mit übereinander angeordneten, kammartigen Trägern und eine Laborspitzenbox in dem Halter aufweist. In den kammartigen Trägern sind Pipettenspitzen gehalten. Durch Herausziehen von Trägereinrichtungen können Pipettenspitzen nach unten in die Laborspitzenbox befördert werden. Wenn die Laborspitzenbox befüllt ist, kann sie aus dem Halter entnommen und eine leere Laborspitzenbox zum Befüllen mit Pipettenspitzen in den Halter eingesetzt werden.

Davon ausgehend liegt der Erfindung die Aufgabe zugrunde, einen Laborautomaten zu schaffen, der eine platzsparende Lagerung einer größeren Anzahl Pipettenspitzen ermöglicht. Ferner soll eine Verwendung eines Laborautomaten vorgeschlagen werden, bei der Pipettenspitzen platzsparend untergebracht werden können.

Die Aufgabe wird durch einen Laborautomaten gemäß Anspruch 1 gelöst. Vorteilhafte Ausführungsarten des Laborautomaten sind in Unteransprüchen angegeben.

Der erfindungsgemäße Laborautomat zur automatischen Behandlung von flüssigen Laborproben umfasst
- einen Arbeitsbereich,
- mehrere vorbestimmte Arbeitsplätze für Laborartikel im Arbeitsbereich, die ein an die Grundfläche einer standardisierten Mikrotiterplatte angepasstes Format haben,
- mindestens eine Bewegungsvorrichtung zum Bewegen von Werkzeugen oberhalb des Arbeitsbereiches,
- mindestens ein Transportwerkzeug, das mittels der Bewegungsvorrichtung bewegbar ist, um im Arbeitsbereich Laborartikel zu verlagern,
- mindestens ein Pipettierwerkzeug, das mittels der Bewegungsvorrichtung bewegbar ist, um im Arbeitsbereich Pipettenspitzen aufzunehmen und abzugeben und mittels der Pipettenspitzen Flüssigkeiten aufzunehmen und abzugeben,
- einen Halter für Pipettenspitzenträger,
dadurch gekennzeichnet, dass
- der Halter für Pipettenspitzenträger mindestens eine Trageinrichtung mit einer rechteckigen Durchgangsöffnung und eine mit der Trageinrichtung verbundene Stützeinrichtung umfasst,
- wobei der Halter mit der Stützeinrichtung neben einem auf einem Arbeitsplatz gelagerten Pipettenspitzenträger auf dem Arbeitsbereich aufgesetzt ist, sodass die Trageinrichtung oberhalb des Pipettenspitzenträgers, der eine an die Grundfläche einer standardisierten Mikrotiterplatte angepasste Grundfläche aufweist, angeordnet ist, mittels des Pipettierwerkzeuges durch die Durchgangsöffnung der Trageinrichtung hindurch Pipettenspitzen von dem unter der Trageinrichtung gelagerten Pipettenspitzenträger aufnehmbar sind und auf der Trageinrichtung ein Pipettenspitzenträger, der eine an die Grundfläche einer standardisierten Mikrotiterplatte angepasste Grundfläche aufweist, gelagert werden kann, und
- dass der Laborautomat eine elektronische Steuereinrichtung umfasst, die mit der Bewegungsvorrichtung verbunden und ausgebildet ist, die Bewegungen des Transportwerkzeugs und des Pipettierwerkzeugs mittels der Bewegungsvorrichtung zu steuern, sodass mittels des Pipettierwerkzeugs Pipettenspitzen vom auf der Trageinrichtung gelagerten Pipettenspitzenträger aufnehmbar sind, der Pipettenspitzenträger mittels des Transportwerkzeuges von der Trageinrichtung abnehmbar ist und mittels der Pipettiervorrichtung durch die Durchgangsöffnung der Trageinrichtung hindurch Pipettenspitzen von einem darunter gelagerten Pipettenspitzenträger aufnehmbar sind.

Bei dem erfindungsgemäßen Laborautomaten kann eine größere Anzahl von Pipettenspitzenträgern mit darin gehaltenen Pipettenspitzen im Arbeitsbereich gelagert werden, indem auf einem oder mehreren Arbeitsplätzen mithilfe des Halters Pipettenspitzenträger mit darin gehaltenen Pipettenspitzen in mindestens zwei verschiedenen Höhen übereinander gelagert werden. Bei entsprechender Ausführung des Halters sind nur zwei oder mehr als zwei Pipettenspitzenträger übereinander auf demselben Arbeitsplatz lagerbar. Vor einer automatischen Behandlung von Laborproben kann der Laborautomat von Hand mit Pipettenspitzenträgern und darin gehaltenen Pipettenspitzen bestückt werden. Während des automatischen Ablaufs kann das Pipettierwerkzeug von dem obersten Pipettenspitzenträger auf einem Halter Pipettenspitzen aufnehmen und nach dem Pipettieren die kontaminierten Pipettenspitzen in einen Abfallbehälter abgeben. Wenn sämtliche Pipettenspitzen aus dem obersten Pipettenspitzenträger entnommen sind, kann der Laborautomat mittels des Transportwerkzeuges den obersten Pipettenspitzenträger vom Halter abnehmen und ebenfalls in den Abfallbehälter abgeben. Danach kann der Laborautomat mit dem Pipettierwerkzeug durch die Durchgangsöffnung der Trageinrichtung des Halters hindurch Pipettenspitzen aus dem darunter angeordneten Pipettenspitzenträger entnehmen. Wenn sämtliche Pipettenspitzen aus diesem Pipettenspitzenträger entnommen sind und darunter Pipettenspitzen in einem weiteren Pipettenspitzenträger auf einer weiteren Trageinrichtung gelagert sind, kann das Transportwerkzeug den geleerten Pipettenspitzenträger entfernen und danach das Pipettierwerkzeug durch die Durchgangsöffnungen der beiden oberen Trageinrichtungen hindurch Pipettenspitzen aus dem darunter angeordneten Pipettenspitzenträger entnehmen. Auf diese Weise können die Pipettenspitzen von sämtlichen Pipettenspitzenträgern abgenommen werden, die auf demselben Arbeitsplatz gelagert sind.

Bei dem erfindungsgemäßen Laborautomaten kann die Anzahl der Pipettenspitzen, die auf dem Arbeitsbereich gelagert wird, vervielfacht werden. Bei Anordnung in nur zwei Höhenlagen übereinander ist eine Verdoppelung der Anzahl Pipettenspitzen und bei Anordnung in mehr als zwei Höhenlagen übereinander ist die Unterbringung einer entsprechend erhöhten Anzahl Pipettenspitzen möglich.

In der vorliegenden Anmeldung sind mit "standardisierte Mikrotiterplatten" solche Mikrotiterplatten bezeichnet, die entsprechend den Empfehlungen der Society for Biomolecular Screening (SBS) durch das American National Standard Institute (ANSI) standardisiert sind (ANSI SLAS 1-4 - 2004 und ANSI SLAS 6-2012). Diese Mikrotiterplatten weisen eine im Wesentlichen rechteckige Grundfläche (*foot print*) mit Außenabmessungen (Länge: 127,76 mm, Breite 85,48 mm), Eckradien und Toleranzen auf, die in der Norm ANSI SLAS 1-2004 (früher: ANSI/SBS 1-2004) festgelegt sind. Bei dem erfindungsgemäßen Laborautomaten sind die Arbeitsplätze so ausgebildet, dass darauf Mikrotiterplatten und andere Laborartikel aufsetzbar sind, welche die Grundfläche der standardisierten Mikrotiterplatten haben.

In der vorliegenden Anmeldung ist mit Pipettenspitzenträger eine plattenförmige Vorrichtung bezeichnet, die eine Vielzahl Löcher in Matrixanordnung aufweist, in die Pipettenspitzen einsetzbar sind. Mit Pipettenspitzenhalter ist ein Rohr oder Kasten mit Rechteckquerschnitt, wobei auf den oberen Rand des Rohres oder Kastens ein Pipettenspitzenträger aufsetzbar ist, sodass die Pipettenspitzen durch eine obere Öffnung in das Rohr oder den Kasten eingreifen. Die Pipettenspitzenträger und Pipettenspitzenhalter weisen eine Grundfläche auf, die an die Grundfläche einer standardisierten Mikrotiterplatte angepasst ist.

Gemäß einer Ausführungsart der Erfindung weist der Halter nur eine Trageinrichtung auf, sodass ein Pipettenspitzenträger auf der Trageinrichtung und darunter ein weiterer Pipettenspitzenträger auf demselben Arbeitsplatz gelagert werden können. Gemäß einer anderen Ausführungsart weist der Halter mehr als eine Trageinrichtung auf, sodass mehrere Pipettenspitzenträger übereinander auf Trageinrichtungen und darunter ein weiterer Pipettenspitzenträger auf demselben Arbeitsplatz gelagert werden kann. Die Pipettenspitzenträger, die nicht auf einer Tageinrichtung gelagert sind, können auf einem Pipettenspitzenhalter gelagert sein, der seinerseits auf dem Arbeitsplatz gelagert ist. Hierbei greifen die in den Pipettenspitzenträger eingesetzten Pipettenspitzen in den Pipettenspitzenhalter ein. Ferner ist es möglich, diese Pipettenspitzenträger direkt auf den Arbeitsplatz aufzusetzen, wobei der Arbeitsplatz eine Vertiefung aufweist, in die die im Pipettenspitzenträger gehaltenen Pipettenspitzen eingreifen. Ferner ist es möglich, dass der Arbeitsplatz eine Vertiefung aufweist, in den der Pipettenspitzenträger mit den darin gehaltenen Pipettenspitzen einsetzbar ist, wobei der Pipettenspitzenträger in der Vertiefung in einem Abstand oberhalb des Bodens der Vertiefung abgestützt ist, sodass die im Pipettenspitzenträger gehaltenen Pipettenspitzen darunter genügend Platz in der Vertiefung aufweisen. Diese Ausführungsart ist vorteilhaft für die Unterbringung von Pipettenspitzenträger in mehr als zwei Höhenlagen auf demselben Arbeitsplatz.

Gemäß einer Ausführungsart der Erfindung weist der Halter eine Lagereinrichtung auf, über die sich die Stützeinrichtung auf dem Arbeitsbereich abstützt, wobei die Lagereinrichtung ausgebildet ist, einen Pipettenspitzenträger, der eine an die Grundfläche einer standardisierten Mikrotiterplatte angepasste Grundfläche aufweist, in einer rechteckigen Aufnahmeöffnung aufzunehmen oder am Rand zu unterstützen. Die Lagereinrichtung kann so ausgebildet sein, dass sie den Halter in einer vorbestimmten Weise auf einen Arbeitsplatz und/oder den untersten Pipettenspitzenträger in einer vorbestimmten Weise auf den Halter ausrichtet. Bei einer anderen Ausführungsart weist der Halter keine Lagereinrichtung auf und stützt sich die Stützeinrichtung unmittelbar auf dem Arbeitsbereich ab.

Gemäß einer weiteren Ausführungsart ist die Trageinrichtung ein rechteckiger erster Rahmen und/oder ist die Lagereinrichtung ein rechteckiger zweiter Rahmen. Die Ausführung als Rahmen ist vorteilhaft für eine genaue Ausrichtung des Halters auf einen Arbeitsplatz und der Pipettenspitzenträger auf den Halter und begünstigt eine materialsparende und stabile Ausführung des Halters.

Der Halter kann hinreichend stabil ausgebildet werden, sodass er den Aufpresskräften beim gleichzeitigen Aufklemmen einer Mehrzahl Pipettenspitzen auf einem Mehrkanal-Pipettierwerkzeug standhält. Bei einem Acht-Kanal-Pipettierwerkzeug können diese beispielsweise insgesamt 120 Newton erreichen. Der Halter ist beispielsweise aus Edelstahl oder einem anderen metallischen Werkstoff und/oder aus einem Kunststoff mit einer entsprechenden Festigkeit hergestellt.

Gemäß einer weiteren Ausführungsart sind die Abmessungen der Durchgangsöffnung im ersten Rahmen kleiner als die Abmessungen der Aufnahmeöffnung im zweiten Rahmen, sodass die Trageinrichtung einen Pipettenspitzenträger am äußeren Rand unterstützen und die Lagereinrichtung einen Pipettenspitzenträger in der Aufnahmeöffnung aufnehmen kann.

Gemäß einer weiteren Ausführungsart umfasst die Stützeinrichtung mindestens eine Stange oder einen anderen linearen Verbindungsträger, der oben mit der Trageinrichtung verbunden ist. Gemäß einer weiteren Ausführungsart ist die mindestens eine Stange oder ein anderer linearer Verbindungsträger unten mit der Lagereinrichtung verbunden. Gemäß einer weiteren Ausführungsart ist die mindestens eine Stange oder ein anderer linearer Verbindungsträger oben mit dem ersten Rahmen und unten mit dem zweiten Rahmen verbunden. Diese Ausführungsarten sind besonders materialsparend und stabil. Gemäß einer weiteren Ausführungsart sind der erste Rahmen und der zweite Rahmen über mindestens ein Paar Stangen oder anderer linearer Verbindungsträger miteinander verbunden, die einander auf parallelen Seiten der Rahmen gegenüberliegen. Gemäß einer weiteren Ausführungsart sind der erste Rahmen und der zweite Rahmen jeweils an derselben Seite des Rahmens über zwei Stangen miteinander verbunden. Gemäß einer weiteren Ausführungsart sind sie an den langen Seiten der Rahmen miteinander verbunden.

Durch einen Rahmen wird ein Pipettenspitzenträger am Rand gleichmäßig unterstützt, sodass die Pipettenspitzenträger beim Aufklemmen von Pipettenspitzen auf die Sitze des Pipettierwerkzeuges gleichmäßig belastet wird und materialsparend ausgeführt werden kann. Bei einer anderen Ausführungsart weist die Trageinrichtung und/oder die Lagereinrichtung jeweils mehrere Trag- und/oder Lagerelemente auf, auf denen sich ein Pipettenspitzenträger abstützen kann. Bei dieser Ausführungsart kann der jeweilige Pipettenspitzenträger am äußeren Rand in mehreren Abschnitten unterstützt werden, ohne eine Unterstützung dazwischen. Diese Ausführungsart kann beispielsweise verwendet werden, um mittels des Transportwerkzeuges einen unter einer Trageinrichtung angeordneten Pipettenspitzenträger ohne Behinderung greifen und entfernen zu können.

Gemäß einer weiteren Ausführungsart sind die Arbeitsplätze durch eine Anordnung von ersten Ausrichtelementen begrenzt, die ausgebildet sind, eine dazwischen eingesetzte standardisierte Mikrotiterplatte auf den Arbeitsplatz auszurichten und weist der Halter im unteren Randbereich zweite Ausrichtelemente mit zu den ersten Ausrichtelementen komplementärer Form zur Ausrichtung des Halters an den ersten Ausrichterelementen auf. Hierdurch wird erreicht, dass der Halter genau auf den Arbeitsplatz ausgerichtet werden kann.

Gemäß einer weiteren Ausführungsart umfassen die ersten Ausrichtelemente mehrere erste Stifte und mindestens ein erstes Federelement, die neben den Ecken der Arbeitsplätze vom Arbeitsbereich hochstehen, und umfassen die zweiten Ausrichtelemente erste Ausrichtlöcher, die ausgebildet sind, die ersten Stifte und das erste Federelement aufzunehmen. Gemäß einer weiteren Ausführungsart sind die ersten Ausrichtlöcher zur Innenseite des zweiten Rahmens hin geöffnet. Hierdurch wird erreicht, dass die ersten Ausrichtelemente zugleich den Halter und eine standardisierte Mikrotiterplatte oder einen anderen Laborartikel mit der Grundfläche einer standardisierten Mikrotiterplatte auf den Arbeitsplatz ausrichten können.

Gemäß einer weiteren Ausführungsart ist die Trageinrichtung in einem Abstand von der Unterseite des Halters angeordnet, der die Höhe einer Anordnung aus einem Pipettenspitzenhalter mit einem darauf aufgesetzten Pipettenspitzenträger und darin gehaltenen Pipettenspitzen übersteigt. Für die Verwendung handelsüblicher Pipettenspitzenhalter, Pipettenspitzenträger und Pipettenspitzen liegt der Abstand bevorzugt im Bereich von 35 mm bis 110 mm. Diese Ausführungsart ist besonders geeignet zum Aufsetzen einer Anordnung aus einem Pipettenspitzenhalter und einem Pipettenspitzenträger oben auf die Trageinrichtung, da hierdurch eine Kollision mit der entsprechenden Anordnung unter der ersten Trageinrichtung vermieden wird.

Gemäß einer weiteren Ausführungsart ist der Abstand der Trageinrichtung von der Unterseite des Halters so bemessen, dass in einem auf die Trageinrichtung aufgesetzten Pipettenspitzenträger gehaltene Pipettenspitzen unten oberhalb der Pipettenspitzen in einem auf einen Pipettenspitzenhalter aufgesetzten Pipettenspitzenträger enden. Für die Verwendung handelsüblicher Pipettenspitzenhalter, Pipettenspitzenträger und Pipettenspitzen liegt der Abstand bevorzugt im Bereich von 70 mm bis 230 mm. Durch diese Ausführungsart wird verhindert, dass die Pipettenspitzen in dem Pipettenspitzenträger, der direkt auf die Trageinrichtung aufgesetzt ist, mit den Pipettenspitzen kollidieren oder verklemmen, die in einem Pipettenspitzenträger auf einem Pipettenspitzenhalter unterhalb der Trageinrichtung gehalten sind.

Gemäß einer weiteren Ausführungsart weist der erste Rahmen des Halters an den Innenseiten von mindestens zwei parallelen Rahmenteilen bezüglich der Oberseite des ersten Rahmens nach unten versetzte, die Durchgangsöffnung begrenzende Auflageleisten zum Lagern eines Pipettenspitzenträgers oder Pipettenspitzenhalters an zumindest zwei parallelen Rändern auf. Ein auf die Auflageleisten aufgesetzter Pipettenspitzenträger oder Pipettenspitzenhalter kann durch die Ränder der Durchgangsöffnung geführt und auf den Halter ausgerichtet werden. Durch die Abstützung des Pipettenspitzenträgers oder Pipettenspitzenhalters nur an zwei parallelen Rändern wird eine große Durchgangsöffnung zum Einsetzen des Pipettierwerkzeuges ermöglicht. Bei einer weiteren Ausführungsart sind die beiden Leisten an den beiden schmalen Seiten des ersten Rahmens angeordnet.

Gemäß einer weiteren Ausführungsart weist der erste Rahmen des Halters an dem äußeren Rand mindestens eines Rahmenteiles einer Reihe mit Löchern für die Aufnahme von Pipettenspitzen auf. Dies ermöglicht die Unterbringung zusätzlicher Pipettenspitzen, sodass die Anzahl Pipettenspitzen weiter gesteigert wird, die für die Durchführung einer automatischen Behandlung von Laborproben zur Verfügung steht. In den Löchern des Rahmens können Pipettenspitzen gehalten werden, die vom gleichen Typ wie die Pipettenspitzen in den Pipettenspitzenträgern oder von einem anderen Typ sind. Gemäß einer weiteren Ausführungsart weist der erste Rahmen an einer schmalen Rahmenseite die Reihe mit Löchern für die Aufnahme von Pipettenspitzen auf.

Gemäß einer weiteren Ausführungsart ist das Pipettierwerkzeug ein Pipettierwerkzeug mit mindestens einer Kolben-Zylinder-Einrichtung, mit einem oder mehreren Zapfen oder anderen Sitzen zum Aufklemmen einer oder mehrerer Pipettenspitzen, wobei die Kolben-Zylinder-Einrichtung über eine oder mehrere Leitungen mit einem Loch in jedem Sitz verbunden ist. Die Pipettenspitzen können direkt durch Aufklemmen auf den Sitz oder mittels mindestens eines am Sitz gehaltenen O-Ringes abdichtend auf dem Sitz festgeklemmt sein. Die Zapfen sind vorzugsweise konisch oder zylindrisch. Mittels der Bewegungseinrichtung ist jeder Kolben in dem Zylinder der Kolben-Zylinder-Einrichtung verlagerbar. Die Pipettiervorrichtung ist beispielsweise ausgebildet, wie das Dosierwerkzeug in der EP 1 407 861 B1. Das darin beschriebene Dosierwerkzeug kann als Mehrkanal-Dosierwerkzeug ausgeführt werden, indem der Abtrieb mit mehreren parallelen Kolben-Zylinder-Einrichtungen verbunden wird, die mit parallelen Zapfen zum Aufstecken von Pipettenspitzen verbunden sind. Alternativ kann das Pipettierwerkzeug so ausgebildet sein, wie das in der DE 10 2016 111 910 A1 oder der DE 10 2016 111 912 A1 beschriebene Dosierwerkzeug. In dieser Hinsicht wird Bezug genommen auf die vorstehend genannten Patentveröffentlichungen, deren Inhalt hiermit in diese Anmeldung aufgenommen wird.

Gemäß einer weiteren Ausführungsart ist das Transportwerkzeug ein Greiferwerkzeug, das um eine horizontale Achse schwenkbare Greifarme mit an einander zugewandten Innenseiten vorstehenden Nadeln aufweist, die mittels der Bewegungsvorrichtung zum Greifen eines Laborartikels zusammenschwenkbar und zum Freigeben eines Laborartikels auseinanderschwenkbar sind. Das Geiferwerkzeug ist vorzugsweise ausgebildet, wie in der EP 1 407 861 B1 beschrieben. In dieser Hinsicht wird Bezug genommen auf die EP 1 407 861 B1, deren Inhalt hiermit in diese Anmeldung aufgenommen wird.

Eine weitere Ausführungsart umfasst einen vorbestimmten Lagerplatz im Arbeitsbereich für das Transportwerkzeug und einen Adapter mit einem rechteckigen Rohr, der mit seinem unteren Rand auf dem Lagerplatz aufsetzbar ist, Mittel zum formschlüssigen Verbinden mit dem Transportwerkzeug aufweist und dessen oberer Rand ausgebildet ist, einen Pipettenspitzenträger zu tragen, sodass darin eingesetzte Pipettenspitzen in das Rohr eingreifen. Hierdurch werden weitere Lagerplätze für Pipettenspitzen im Arbeitsbereich zur Verfügung gestellt. Grundsätzlich können die Pipettenspitzen von dem Pipettenspitzenträger abgenommen werden, wenn dieser auf dem Adapter angeordnet ist. Sofern das Transportwerkzeug die Abnahme der Pipettenspitzen vom Pipettenspitzenträger stört, kann zunächst das Transportwerkzeug von dem Lagerplatz entfernt und an anderer Stelle gelagert werden. Sofern keine andere Lagerstelle zur Verfügung steht oder die Bewegungsvorrichtung nicht geeignet ist, mittels der Pipettiervorrichtung sämtliche Pipettenspitzen von dem Pipettenspitzenträger auf dem Adapter abzunehmen, kann mittels des Transportwerkzeuges zunächst der Pipettenspitzenträger von dem Adapter abgenommen und auf einer Trageinrichtung eines Halters oder auf einem Pipettenspitzenhalter auf einen Arbeitsplatz abgesetzt werden. Danach sind mittels der Pipettiervorrichtung Pipettenspitzen von diesem Pipettenspitzenträger abnehmbar.

Gemäß einer weiteren Ausführungsart weist der Lagerplatz eine Anordnung von dritten Ausrichtelementen und der Adapter unten vierte Ausrichterelemente mit zu den dritten Ausrichterelementen komplementärer Form zur Ausrichtung des Adapters an den dritten Ausrichtelementen auf den Lagerplatz auf und/oder weist der Adapter am oberen Rand eine Anordnung von fünften Ausrichtelementen auf, die ausgebildet sind, einen Pipettenspitzenträger mit einer an die Grundfläche einer standardisierten Mikrotiterplatte angepassten Grundfläche auf den Adapter auszurichten. Hierdurch wird eine genaue Ausrichtung des Pipettenspitzenträgers auf den Lagerplatz ermöglicht, der die automatische Aufnahme des Pipettenspitzenträgers durch das Greiferwerkzeug und/oder von Pipettenspitzen durch das Pipettierwerkzeug begünstig. Gemäß einer weiteren Ausführungsart umfassen die dritten Ausrichtelemente mehrere zweite Stifte, die vom Lagerplatz hochstehen, und umfassen die vierten Ausrichtelemente zweite Ausrichtlöcher an der Unterseite des Adapters, die ausgebildet sind, die zweiten Stifte aufzunehmen. Gemäß einer weiteren Ausführungsart umfassen die fünften Ausrichtelemente mehrere hochstehende dritte Stifte und mindestens ein zweites Federelement an den Ecken des oberen Randes des Adapters. Der Adapter ist auch für die Lagerung eines anderen Laborartikels geeignet, beispielsweise einer Mikrotiterplatte oder eines anderen Laborartikels, dessen Grundfläche mit der Grundfläche einer standardisierten Mikrotiterplatte übereinstimmt.

Gemäß einer weiteren Ausführungsart umfasst die Bewegungsvorrichtung einen Werkzeughalter, der ausgebildet ist, wahlweise mit dem Pipettierwerkzeug oder dem Greiferwerkzeug oder einem anderen Transportwerkzeug verbunden zu werden. Gemäß einer weiteren Ausführungsart ist der Werkzeughalter ausgebildet, eine Antriebsbewegung von der Bewegungsvorrichtung auf das Pipettierwerkzeug oder auf das Transportwerkzeug zu übertragen, um die Verlagerung des Kolbens der mindestens einen Kolben-Zylinder-Einrichtung oder die Verlagerung eines Greiferarmes oder eines anderen Elements zum Greifen eines Laborartikels zu steuern.

Gemäß einer weiteren Ausführungsart ist der Werkzeughalter ausgebildet, wie in der EP 1 407 861 B1 beschrieben. In dieser Hinsicht wird Bezug genommen auf die EP 1 407 861 B1, deren Inhalt hiermit in diese Anmeldung aufgenommen wird.

Mit dem erfindungsgemäßen Laborautomaten sind flüssige Laborproben, Reagenzien und andere Flüssigkeiten behandelbar. Hierzu zählen reine Flüssigkeiten und einphasige und mehrphasige Gemische von Flüssigkeiten (z. B. Lösungen und Emulsionen) sowie von Flüssigkeiten und Feststoffen (z. B. Suspensionen).

Ferner wird die Erfindung durch die Verwendung eines Laborautomaten gemäß Anspruch 14 gelöst.

Bei der erfindungsgemäßen Verwendung des Laborautomaten gemäß einen der Ansprüche 1 bis 13 zum automatischen Behandeln von flüssigen Laborproben werden
- auf mindestens einem vorbestimmten Arbeitsplatz Pipettenspitzen in einem Pipettenspitzenträger mit einer an die Grundfläche einer standardisierten Mikrotiterplatte angepassten Grundfläche bereitgestellt,
- der Halter mit der Stützeinrichtung neben einem Pipettenspitzenträger auf dem Arbeitsbereich aufgesetzt, sodass die Trageinrichtung oberhalb des Pipettenspitzenträgers angeordnet ist,
- auf die Trageinrichtung des Halters Pipettenspitzen in einem Pipettenspitzenträger mit einer an die Grundfläche einer standardisierten Mikrotiterplatte angepassten Grundfläche bereitgestellt,
- mittels des Pipettierwerkzeugs Pipettenspitzen aus dem Pipettenspitzenträger auf der Trageinrichtung entnommen und nach der Übertragung von Flüssigkeit abgegeben,
- mittels des Transportwerkzeugs der Pipettenspitzenträger von der Trageinrichtung abgenommen und
- mittels des Pipettierwerkzeugs durch die Durchgangsöffnung der Trageinrichtung hindurch Pipettenspitzen aus einem darunter angeordneten Pipettenspitzenträger entnommen und für die Übertragung von Flüssigkeit verwendet.

Der Verwendung kommen die bereits erläuterten vorteilhaften Wirkungen des Laborautomaten zu. Dies gilt auch für die nachfolgenden Ausführungsarten der Verwendung.

Gemäß einer Ausführungsart wird ein Pipettenspitzenträger auf den Arbeitsplatz aufgesetzt und greifen die darin gehaltenen Pipettenspitzen in eine Vertiefung im Arbeitsplatz ein oder wird ein Pipettenspitzenträger auf einen Pipettenspitzenhalter aufgesetzt und wird der Pipettenspitzenhalter auf den Arbeitsplatz aufgesetzt und/oder wird ein Pipettenspitzenträger auf die Trageinrichtung aufgesetzt oder der Pipettenspitzenträger oben auf einen Pipettenspitzenhalter aufgesetzt und der Pipettenspitzenhalter auf die Trageinrichtung aufgesetzt.

Gemäß einer weiteren Ausführungsart wird, wenn auf der Trageinrichtung kein Pipettenspitzenträger angeordnet ist, ein Pipettenspitzenträger mittels des Transportwerkzeugs vom Adapter abgenommen und auf eine Trageinrichtung des Halters oder einen darauf angeordneten Pipettenspitzenhalter aufgesetzt und werden mittels des Pipettierwerkzeugs Pipettenspitzen von dem Pipettenspitzenträger auf der Trageinrichtung aufgenommen und für die Übertragung von Flüssigkeit verwendet.

Gemäß einer weiteren Ausführungsart, bei der über mehreren vorbestimmten Arbeitsplätzen Pipettenspitzen in Pipettenspitzenträgern und Haltern übereinander angeordnet sind, werden zunächst mittels des Pipettierwerkzeuges die Pipettenspitzen aus dem obersten Pipettenspitzenträger oberhalb eines Arbeitsplatzes entnommen, wird danach mittels des Transportwerkzeugs der oberste Pipettenspitzenträger von der obersten Trageinrichtung entfernt, werden danach mittels des Pipettierwerkzeuges Pipettenspitzen aus einem Pipettenspitzenträger entnommen, der unterhalb der obersten Trageinrichtung gelagert ist und wird entsprechend weiter verfahren, bis die Pipettenspitzen aus sämtlichen Pipettenspitzenträgern entnommen sind, die auf demselben Arbeitsplatz angeordnet sind. Danach werden die Pipettenspitzen aus Pipettenspitzenträgern entnommen, die in verschiedenen Höhenlagen auf einem anderen Arbeitsplatz angeordnet sind. Bei einer alternativen Ausführungsart werden zunächst mittels des Pipettierwerkzeuges Pipettenspitzen aus Pipettenspitzenträgern entnommen, die auf verschiedenen Haltern über verschiedenen Arbeitsplätzen angeordnet sind. Danach kann das Transportwerkzeug die Pipettenspitzenträger von den obersten Trageinrichtungen entfernen und danach das Pipettierwerkzeug Pipettenspitzen aus Pipettenspitzenträgern entnehmen, die unterhalb der obersten Trageinrichtungen gelagert sind. Hierdurch können bei einem Laborautomaten, der eine Bewegungsvorrichtung aufweist, die nur abwechselnd mit dem Transportwerkzeug und dem Pipettierwerkzeug bestückbar ist, Umrüstzeiten vermindert werden.

Die Erfindung wird nachfolgend anhand der anliegenden Zeichnungen von Ausführungsbeispielen näher erläutern. In den Zeichnungen zeigen:
- Fig. 1: Arbeitsplätze im Arbeitsbereich eines Laborautomaten mit Haltern und Pipettenspitzenträgern in einer Perspektivansicht schräg von oben und von der Seite;
- Fig. 2: ein Arbeitsplatz mit niedrigem Halter, Pipettenspitzenhaltern und Pipettenspitzenträgern in einer Perspektivansicht schräg von oben;
- Fig. 3: ein niedriger Halter in einer Perspektivansicht schräg von oben;
- Fig. 4: ein großer Halter beim Entnehmen von Pipettenspitzen aus dem unteren Pipettenspitzenträger in einer Perspektivansicht schräg von oben;
- Fig. 5: zwei Arbeitsplätze mit großen Pipettenspitzenhaltern und Pipettenspitzenträgern in einer Perspektivansicht schräg von oben;
- Fig. 6: der Laborautomat in einer Perspektivansicht schräg von oben;
- Fig. 7: ein Adapter mit einem darauf angeordneten Pipettenspitzenträger in einer Perspektivansicht schräg von oben;
- Fig. 8: ein Lagerplatz im Arbeitsbereich eines Laborautomaten mit darauf aufgesetztem Adapter mit darauf aufgesetztem Pipettenspitzenträger und auf dem Adapter gelagertem Greiferwerkzeug in einer Perspektivansicht schräg von oben.

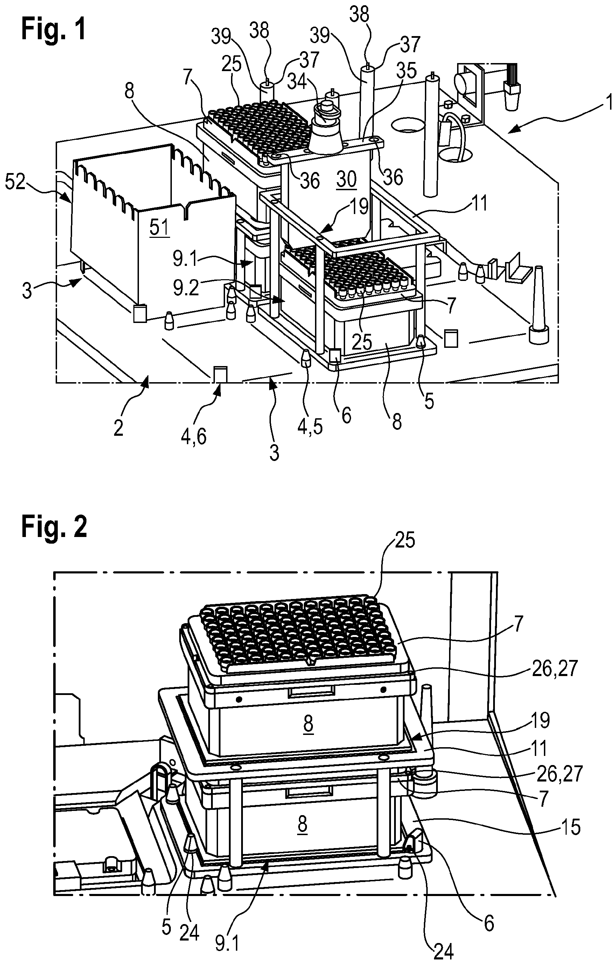

Gemäß Fig. 1 weist ein Laborautomat 1 auf einem ebenen Arbeitsbereich 2 (Arbeitsplatte) mehrere Arbeitsplätze 3 für standardisierte Mikrotiterplatten auf.

Dementsprechend hat jeder Arbeitsplatz 3 ein an die Grundfläche einer standardisierten Mikrotiterplatte angepasstes Format.

Jeder Arbeitsplatz 3 ist begrenzt durch eine Anordnung von ersten Ausrichtelementen 4, die durch vier fest mit dem Arbeitsbereich verbundene erste Stifte 5 und ein erstes Federelement 6 gebildet sind. Zwei erste Stifte 5 sind neben einer Ecke des Arbeitsplatzes an den Enden einer langen und einer kurzen Seite des Arbeitsplatzes angeordnet. Das erste Federelement 6 ist an einer diametral diese Ecke gegenüberliegenden Ecke des Arbeitsplatzes angeordnet. Angrenzend an die langen und kurzen Seitenränder des Arbeitsplatzes 3 sind neben den weiteren Ecken weitere erste Stifte 5 angeordnet.

Im Beispiel weist der Laborautomat sechs Arbeitsplätze 3 auf.

Auf jeden Arbeitsplatz 3 ist eine standardisierte Mikrotiterplatte aufsetzbar, wobei die Mikrotiterplatte von den ersten Ausrichtelementen 4 eingefasst wird. Hierbei wird die Mikrotiterplatte von den ersten Stiften 5 seitlich geführt und von dem ersten Federelement 6 gegen die ersten Stifte 5 gedrückt.

Die in den Zeichnungen gezeigten Pipettenspitzenträger 7 und Pipettenspitzenhalter 8 und anderen Laborartikel haben eine Grundfläche, die an die Grundfläche der standardisierten Mikrotiterplatte angepasst ist. Sie sind im unteren Bereich so ausgebildet, dass sie von ersten Ausrichtelementen 4 auf einen Arbeitsplatz 3 ausgerichtet werden können.

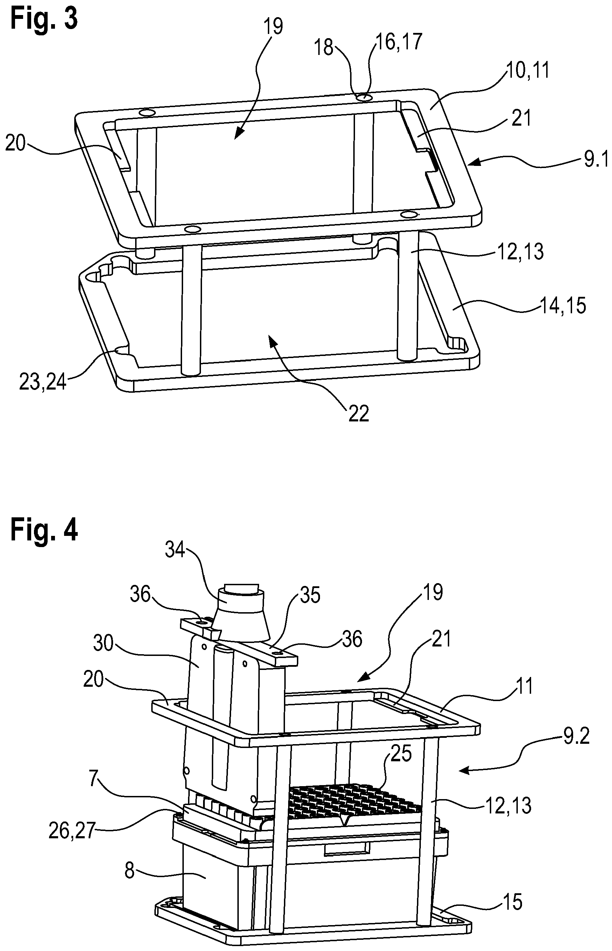

Auf zwei Arbeitsplätzen 3 sind ein niedriger und ein großer Halter 9.1, 9.2 angeordnet, die dem Halten von Pipetenspitzenträgern 7 und Pipettenspitzenhaltern 8 dienen. Gemäß Fig. 3 weist der niedrige Halter 9.1 oben eine Trageinrichtung 10 auf, die durch einen rechteckigen ersten Rahmen 11 gebildet ist. Zudem umfasst der niedrige Halter 9.1 eine Stützeinrichtung 12 in Form von vier Stangen 13, die von der Unterseite des ersten Rahmens vorstehen und mit diesem verbunden sind. Schließlich umfasst der niedrige Halter 9.1 eine Lagereinrichtung 14 in Form eines rechteckigen zweiten Rahmens 15, mit dem die Stangen 13 verbunden sind und von dessen Oberseite sie nach oben vorstehen. Die Stangen 13 sind über Schrauben 16 mit dem ersten und dem zweiten Rahmen 11, 15 verbunden. Die Schraubenköpfe 17 der Schrauben sind in Senkungen 18 der Rahmen 11, 15 angeordnet, sodass sie nicht nach außen vorstehen.

Der erste Rahmen 11 weist eine rechteckige Durchgangsöffnung 19 auf. Der erste Rahmen 11 hat an den beiden parallelen kurzen Rahmenteilen bezüglich seiner Oberseite nach unten versetzte, die Durchgangsöffnung 19 beidseitig begrenzende Auflageleisten 20, 21 auf.

Der zweite Rahmen 15 weist eine rechteckige Aufnahmeöffnung 22 auf. Die Abmessungen der Aufnahmeöffnung 22 sind größer als die Abmessungen der Durchgangsöffnung 19, sodass die Aufnahmeöffnung 22 eine standardisierte Mikrotiterplatte aufnehmen kann.

Der zweite Rahmen 15 weist an den Ecken zweite Ausrichtelemente 23 in Form von ersten Ausrichtlöchern 24 auf, die ausgebildet sind, die ersten Stifte 5 und das erste Federelement 6 aufzunehmen. Die ersten Ausrichtlöcher 24 sind zur Innenseite des zweiten Rahmens 15 hin geöffnet.

Der Halter ist beispielsweise aus Edelstahl hergestellt.

Gemäß Fig. 1 und 2 greifen die ersten Zapfen 5 und das erste Federelement 6 in die ersten Ausrichtlöcher 24 ein und richten den Halter auf den Arbeitsplatz 3 aus.

Auf den ersten Rahmen 11 ist ein Pipettenspitzenhalter 8 aufgesetzt und auf den oberen Randbereich des Pipettenspitzenhalters ist ein Pipettenspitzenträger 7 mit darin gehaltenen Pipettenspitzen 25 aufgesetzt. Der Pipettenspitzenhalter 8 hat an den Ecken des oberen Randes nach oben vorstehende Stifte 26, die von unten in Löcher 27 im Randbereich des Pipettenspitzenträgers 7 eingreifen. Hierdurch wird der Pipettenspitzenträger 7 auf den Pipettenspitzenhalter 8 ausgerichtet. Der Pipettenspitzenhalter 8 greift in die Durchgangsöffnung 19 ein, wobei er an den Schmalseiten mit seinen unteren Rändern auf den Auflageleisten 20, 21 aufliegt. Der Pipettenspitzenhalter 8 wird durch die Ränder der Durchgangsöffnung 19 ausgerichtet, sodass der Pipettenspitzenträger 7 auf den Halter 9.1 ausgerichtet ist.

Direkt auf den Arbeitsplatz 3 ist ein weiterer Pipettenspitzenhalter 8 aufgesetzt, der auf dem oberen Randbereich einen weiteren Pipettenspitzenträger 7 trägt.

Der untere Pipettenspitzenhalter 8 ist in die Aufnahmeeröffnung 22 eingesetzt. Dadurch, dass die ersten Ausrichtlöcher 24 zur Innenseite des zweiten Rahmens 15 hin geöffnet sind, wird der Pipettenspitzenhalter 8 in der Aufnahmeöffnung 22 ausgerichtet. Zusätzlich oder stattdessen kann der Pipettenspitzenhalter 8 durch die inneren Ränder der Aufnahmeöffnung in dem Halter 9.1 ausgerichtet werden.

Pipettenspitzen 25, die in dem oberen Pipettenspitzenträger 7 angeordnet sind, stehen nicht über die Unterseite des ersten Rahmens 11 vor. Deshalb reicht es aus, dass der erste Rahmen 11 einen geringen Abstand von den Pipettenspitzen 25 aufweist, die in dem unteren Pipettenspitzenträger 7 gehalten sind.

In Fig. 1 und 4 ist zusätzlich eine größere Ausführungsform des Halters 9.2 gezeigt, der sich vom niedrigen Halter 9.1 dadurch unterscheidet, dass der Abstand des ersten Rahmens 11 von dem zweiten Rahmen 15 größer ist. Der erste Rahmen 11 hat dieselbe Höhenlage wie die Oberseite des oberen Pipettenspitzenhalters 7 auf dem niedrigeren Halter 9.1. Deshalb ist bei dem größeren Halter 9.2 der obere Pipettenspitzenträger 7 direkt auf die Auflageleisten 20, 21 des ersten Rahmens 15 aufsetzbar, wobei die Pipettenspitzen 25 durch die Durchgangsöffnung 19 des ersten Rahmens 11 hindurch nach unten ragen. Aufgrund der größeren Höhe des Halters 9.2 kollidieren sie nicht mit den darunter angeordneten Pipettenspitzen 25.

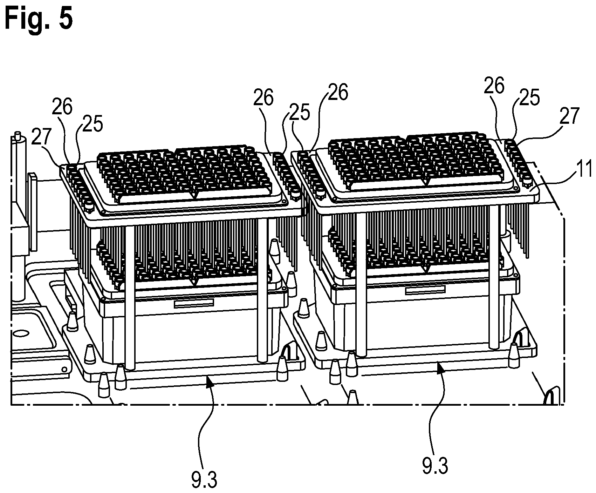

Fig. 5 zeigt eine weitere Ausführungsform des größeren Halters 9.3, bei dem der erste Rahmen 11 jeweils an seitlich vorspringenden Rändern der kurzen Rahmenteile 26 eine Reihe mit Löchern 27 für die Aufnahme von Pipettenspitzen 25 aufweist. Die Pipettenspitzenträger 7 sind direkt auf den oberen Rahmen 11 aufgesetzt, sodass sämtliche Pipettenspitzen 25 auf dem ersten Rahmen 11 etwa auf derselben Höhe angeordnet sind und mit einem Pipettierwerkzeug aufgenommen werden können.

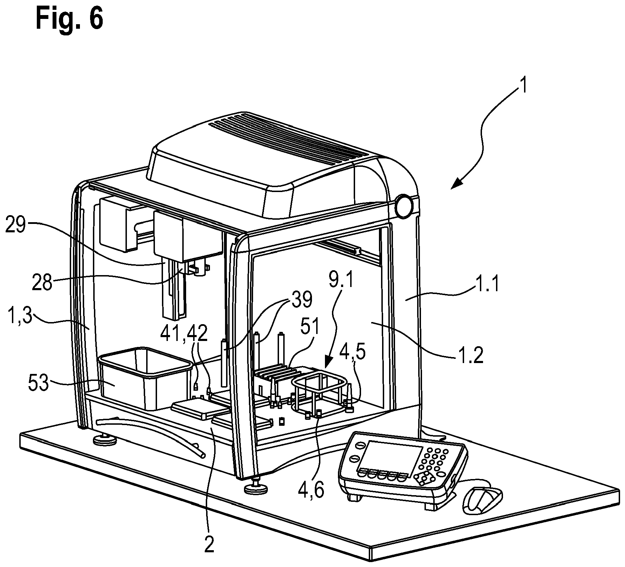

Gemäß Fig. 6 weist der Laborautomat 1 in einem Gehäuse 1.1 mit Fenstern 1.2 in den Seitenwänden und einer hochschiebbaren Tür 1.3 in der Vorderseite oberhalb des Arbeitsbereiches 2 einen Werkzeughalter 28 an einem XYZ-Roboterarm (Dreiachsübertrager) 29 auf. Der Werkzeughalter 28 weist eine Zapfenaufnahme zur Aufnahme verschiedener Werkzeuge auf, zu denen mindestens ein Pipettierwerkzeug 30 und ein Greiferwerkzeug 31 gehören (vgl. Fig. 1, 4, 8).

Mindestens ein Pipettierwerkzeug 30 (vgl. Fig. 1, 4) ist ein Mehrkanal-Pipettierwerkzeug, beispielsweise ein Acht-Kanal-Pipettierwerkzeug. Ferner kann ein Ein-Kanal-Pipettierwerkzeug vorhanden sein. Es können mehrere Mehrkanal-Pipettierwerkzeuge und/oder mehrere Einkanal-Pipettierwerkzeuge vorhanden sein, die verschiedene Volumenbereiche abdecken.

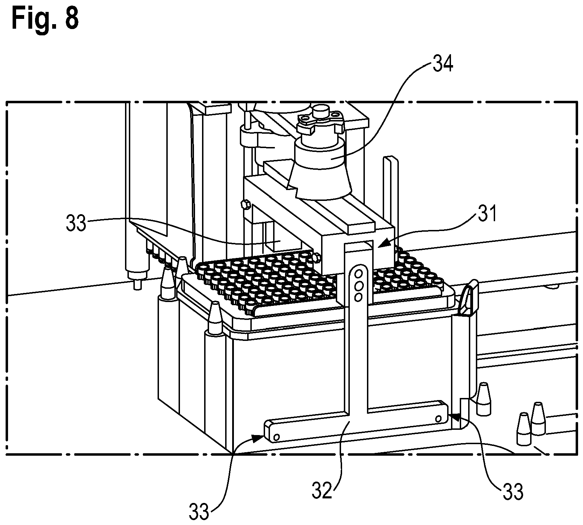

Das Greiferwerkzeug 31 (vgl. Fig. 8) weist um horizontale Achsen schwenkbare Greifarme 32 mit an einander zugewandten Innenseiten vorstehenden Nadeln 33 zum Festklemmen von Laborartikeln auf.

Sämtliche Werkzeuge 30, 31 haben oben einen Befestigungszapfen 34, der in die Zapfenaufnahme des Werkzeughalters 28 einsetzbar und darin fixierbar ist. Wenn der Befestigungszapfen 34 in die Zapfenaufnahme eingesetzt ist, kann der Roboterarm 29 eine Antriebsbewegung auf das jeweilige Werkzeug 30, 31 übertragen. Hierfür ist im Werkzeughalter 28 eine Antriebswelle und in den Werkzeugen 30, 31 jeweils eine Spindel vorhanden, die mit der Antriebswelle über Kopplungseinrichtungen koppelbar ist. Bei dem Pipettierwerkzeug 30 dient die Antriebsbewegung der Verlagerung eines Kolbens in einem Zylinder, welche ein Luftpolster verlagert, welches Flüssigkeit in die eine oder mehrere Pipettenspitzen 25 einsaugt oder daraus ausstößt. Bei dem Greiferwerkzeug 31 bewirkt die Antriebsbewegung das Schwenken der Greifarme 32.

Einzelheiten des Pipettierwerkzeugs 30, des Greiferwerkzeugs 31 und des Werkzeughalters für einen Laborautomaten 1 sind in der EP 1 407 861 B1 beschrieben.

Das Pipettierwerkzeug 30 hat oben eine Traverse 25, von der der Befestigungszapfen 34 nach oben bevorsteht. Die Traverse hat an den Enden Löcher 36. Hinten stehen vom Arbeitsbereich Stangen 37 mit Zapfen 38 an den oberen Enden hoch, wobei jeweils ein Paar Stangen einen Lagerplatz 39 für ein Pipettierwerkzeug 30 bildet. Die Pipettierwerkzeuge 30 sind mit den Löchern in der Traverse auf die Zapfen an den oberen Enden der Stangen aufschiebbar, sodass sie darauf gehalten werden.

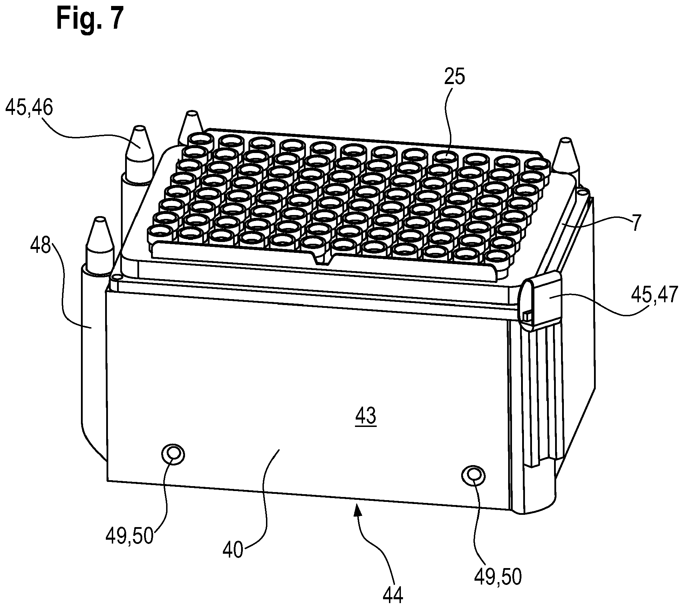

Gemäß Fig. 7 und 8 ist das Greiferwerkzeug an einem Adapter 40 im Arbeitsbereich 2 lagerbar. Hierfür weist der Arbeitsbereich 2 dritte Ausrichtelemente 41 in Form von zwei hochstehenden zweiten Stiften 42 auf, die fest mit dem Arbeitsbereich 2 verbunden sind (vgl. Fig. 6). Der Adapter 40 umfasst ein rechteckiges Rohr 43, das unten von einem Boden 44 verschlossen ist. In dem Boden weist der Adapter 40 vierte Ausrichtelemente in Form von vertikalen Ausrichtlöchern auf.

Der obere Rand des Rohres 43 ist ausgebildet, einen Pipettenspitzenträger 7 zu lagern, sodass darin gehaltene Pipettenspitzen 25 in das Rohr eingreifen. Zum Ausrichten des Pipettenspitzenträgers 7 auf den Adapter 40 weist dieser am oberen Rand eine Anordnung aus fünften Ausrichtelementen 45 auf. Diese ist durch eine Anordnung von dritten Stiften 46 und einem zweiten Federelement 47 gebildet, die der Anordnung der ersten Stifte 5 und des ersten Federelements 6 entspricht, durch die die Arbeitsplätze 3 begrenzt werden. Der Adapter weist an den Ecken vorstehende Rippen 48 auf, auf deren oberen Enden die dritten Stifte 46 und das zweite Federelement 47 fixiert sind. Der Pipettenspitzenträger 7 ist auf dem Adapter 40 gehalten, sodass seine seitlichen Ränder bündig mit den Seitenwänden des Adapters 40 abschließen.

Der Adapter 40 weist in den Seitenwänden Mittel zum formschlüssigen Verbinden 49 mit dem Transportwerkzeug auf, die durch Zentrierlöcher 50 gebildet sind, in die das Greiferwerkzeug 31 mit seinen Nadeln 33 eingreifen kann. In Fig. 8 ist das formschlüssig mit dem Adapter 40 verbundene Greiferwerkzeug 31 gezeigt. Hierbei überspannt das Greiferwerkzeug 31 einen auf den oberen Rand des Adapters 40 aufgesetzten Pipettenspitzenträger 7.

Gemäß Fig. 1 und 6 ist auf einem weiteren Arbeitsplatz 3 ein Gestell 51 für Reservoire oder Gefäße gehalten. Ein solches Gestell 51 und dazugehörige Reservoire sowie Module zum Halten von Gefäßen sind beispielsweise in der EP 2 168 684 B1 beschrieben.

Vorne hat der Arbeitsbereich eine Vertiefung 52, die einen wannenförmigen Abfallbehälter 53 aufnimmt.

Mittels des Mehrkanal-Pipettierwerkzeuges 30 sind die Pipettenspitzen 25 von den Pipettenspitzenträgern 7 aufnehmbar. Danach können sie für das Pipettieren verwendet werden. Nach dem Pipettieren können sie in einen Abfallbehälter 53 abgeworfen werden. Wenn sämtliche Pipettenspitzen 25 aus einem Pipettenspitzenträger 7 entnommen sind, der auf dem ersten Rahmen 11 eines Halters 9.1, 9.2 angeordnet ist, kann das Pipettierwerkzeug 30 auf den Stangen 37 abgesetzt und vom Werkzeughalter 28 getrennt werden. Danach kann das Greiferwerkzeug 31 mit dem Werkzeughalter 28 verbunden und für das Entfernen des Pipettenspitzenträgers 7 vom ersten Rahmen 11 des Halters 9.1, 9.2 verwendet werden. Der Pipettenspitzenträger 7 kann beispielsweise in den Abfallbehälter 53 abgeworfen werden.

Danach kann das Greiferwerkzeug 31 erneut an dem Adapter 40 gelagert und der Werkzeughalter 28 mit einem Pipettierwerkzeug 30 gekoppelt werden. Gemäß Fig. 1 und 4 kann das Pipettierwerkzeug 30 in die Durchgangsöffnung 19 des ersten Rahmens 11 eingeführt werden, um Pipettenspitzen 25 aus einem Pipettenspitzenträger 7 zu entnehmen, der unter dem ersten Rahmen 11 auf einem Pipettenspitzenhalter 8 gelagert ist.

Für die Verwendung der Pipettenspitzen 25, die auf dem Adapter 40 gelagert sind, wird Pipettierwerkzeug 30 auf seinem Lagerplatz 39 abgesetzt und der Werkzeughalter 28 mit dem Greiferwerkzeug 31 verbunden. Mittels des Greiferwerkzeuges 31 wird der Pipettenspitzenträger 7 von dem Adapter 40 abgenommen und auf einem ersten Rahmen 11 eines Halters 9.1, 9.2 abgesetzt, auf dem kein Pipettenspitzenträger 7 ruht. Anschließend wird das Greiferwerkzeug 31 an dem Adapter 40 gelagert und das Pipettierwerkzeug 30 mit dem Werkzeughalter 28 verbunden. Danach können Pipettenspitzen 25 von dem Pipettenspitzenträger 7 abgenommen werden.

Vor dem Bearbeiten von Laborproben kann der Arbeitsbereich 2 von Hand mit Pipettenspitzen 25 bestückt werden. Hierfür können auf einem oder mehrere Arbeitsplätze Pipettenspitzenhalter 8 mit darauf aufgesetzten Pipettenspitzenträgern 7 mit daran gehaltenen Pipettenspitzen 25 aufgesetzt werden. Danach wird mindestens ein Halter 9.1, 9.2 auf den Arbeitsbereich 2 aufgesetzt, wobei die ersten Ausrichtelemente 4 in die zweiten Ausrichtelemente 24 eingeführt werden. Je nach Ausführung des Halters 9.1, 9.2 wird entweder auf den ersten Rahmen 11 direkt ein Pipettenspitzenträger 7 oder ein Pipettenspitzenhalter 8 mit einem darauf aufgesetzten Pipettenspitzenträger 7 aufgesetzt. Bei dem Halter 9.3 können zudem die Löcher 27 in dem ersten Rahmen 11 mit zwei Reihen zusätzlicher Pipettenspitzen 25 bestückt werden.

Schließlich kann auch noch der Adapter 40 mit einem weiteren Pipettenspitzenträger 7 bestückt werden.

Beim Abarbeiten des Programms greift der Laborautomat 1 auf die Pipettenspitzen 25 zurück, die auf den verschiedenen Rahmen 11, 15 des mindestens einen Halters 9.1, 9.2 gelagert sind, sowie auf die Pipettenspitzen 25, die auf dem Adapter 40 gelagert sind.

### Bezugszeichenliste

- 1: Laborautomat
- 1.1: Gehäuse
- 1.2: Fenster
- 1.3: Tür
- 2: Arbeitsbereich
- 3: Arbeitsplatz
- 4: Ausrichtelement
- 5: erste Stifte
- 6: erstes Federelement
- 7: Pipettenspitzenträger
- 8: Pipettenspitzenhalter
- 9.1: niedriger Halter
- 9.2: großer Halter
- 9.3: größerer Halter
- 10: Trageinrichtung
- 11: erster Rahmen
- 12: Stützeinrichtung
- 13: Stange
- 14: Lagereinrichtung
- 15: zweiter Rahmen
- 16: Schraube
- 17: Schraubenkopf
- 18: Senkung
- 19: Durchgangsöffnung
- 20, 21: Auflageleiste
- 22: Aufnahmeöffnung
- 23: Ausrichtelement
- 24: Ausrichtloch
- 25: Pipettenspitze
- 26: Stift
- 27: Loch
- 28: Werkzeughalter
- 29: Roboterarm
- 30: Pipettierwerkzeug
- 31: Greiferwerkzeug
- 32: Greiferarm
- 33: Nadel
- 34: Befestigungszapfen
- 35: Traverse
- 36: Löcher
- 37: Stange
- 38: Zapfen
- 39: Lagerplatz
- 40: Adapter
- 41: Ausrichtelement
- 42: Stift
- 43: Rohr
- 44: Boden
- 45: Ausrichtelement
- 46: dritter Stift
- 47: zweites Federelement
- 48: Rippe
- 49: Mittel zum Verbinden
- 50: Zentrierloch
- 51: Gestell
- 52: Vertiefung
- 53: Abfallbehälter

## Patentansprüche

1. Laborautomat zur automatischen Behandlung von Laborproben umfassend
• einen Arbeitsbereich (2),
• mehrere vorbestimmte Arbeitsplätze (3) für Laborartikel im Arbeitsbereich (2), die ein an die Grundfläche einer standardisierten Mikrotiterplatte angepasstes Format haben,
• mindestens eine Bewegungsvorrichtung (29) zum Bewegen von Werkzeugen oberhalb des Arbeitsbereiches (2),
• mindestens ein Transportwerkzeug (31), das mittels der Bewegungsvorrichtung (29) bewegbar ist, um im Arbeitsbereich Laborartikel zu verlagern,
• mindestens ein Pipettierwerkzeug (30), das mittels der Bewegungsvorrichtung (29) bewegbar ist, um im Arbeitsbereich (2) Pipettenspitzen (25) aufzunehmen und abzugeben und mittels der Pipettenspitzen (25) Flüssigkeiten aufzunehmen und abzugeben,
• einen Halter (9.1, 9.2) für Pipettenspitzenträger (7),
**dadurch gekennzeichnet, dass**
• der Halter (9.1, 9.2) für Pipettenspitzenträger (7) mindestens eine Trageinrichtung (10) mit einer rechteckigen Durchgangsöffnung (19) und eine mit der Trageinrichtung (10) verbundene Stützeinrichtung (12) umfasst,
• wobei der Halter (9.1, 9.2) mit der Stützeinrichtung (12) neben einem auf einem Arbeitsplatz (3) gelagerten Pipettenspitzenträger (7) auf dem Arbeitsbereich (2) aufgesetzt ist, sodass die Trageinrichtung (10) oberhalb des Pipettenspitzenträgers (7), der eine an die Grundfläche der standardisierten Mikrotiterplatte angepasste Grundfläche aufweist, angeordnet ist, mittels des Pipettierwerkzeugs (31) durch die Durchgangsöffnung (19) der Trageinrichtung (10) hindurch Pipettenspitzen (25) von dem unter der Trageinrichtung (10) gelagerten Pipettenspitzenträger (7) aufnehmbar sind und auf der Trageinrichtung (10) ein Pipettenspitzenträger (7), der eine an die Grundfläche der standardisierten Mikrotiterplatte angepasste Grundfläche aufweist, gelagert werden kann, und
• dass der Laborautomat eine elektronische Steuereinrichtung umfasst, die mit der Bewegungsvorrichtung (29) verbunden und ausgebildet ist, die Bewegungen des Transportwerkzeugs (31) und des Pipettierwerkzeugs (30) mittels der Bewegungsvorrichtung (29) zu steuern, sodass mittels des Pipettierwerkzeugs (30) Pipettenspitzen (25) vom auf der Trageinrichtung (10) gelagerten Pipettenspitzenträger (7) aufnehmbar sind, der Pipettenspitzenträger (7) mittels des Transportwerkzeuges (31) von der Trageinrichtung (10) abnehmbar ist und mittels des Pipettierwerkzeugs (30) durch die Durchgangsöffnung (19) der Trageinrichtung (10) hindurch Pipettenspitzen (25) von dem darunter gelagerten Pipettenspitzenträger (7) aufnehmbar sind.

2. Laborautomat gemäß Anspruch 1, bei dem der Halter (9.1, 9.2) eine Lagereinrichtung (14) aufweist, über die sich die Stützeinrichtung (12) auf dem Arbeitsbereich (2) abstützt, wobei die Lagereinrichtung (14) ausgebildet ist, einen Pipettenspitzenträger (7) oder Pipettenspitzenhalter (8), der eine an die Grundfläche einer standardisierten Mikrotiterplatte angepasste Grundfläche aufweist, in einer rechteckigen Aufnahmeöffnung (22) aufzunehmen oder am Rand zu unterstützen.

3. Laborautomat nach Anspruch 1 oder 2, bei dem die Trageinrichtung (10) ein rechteckiger erster Rahmen (11) ist und die Lagereinrichtung (14) ein rechteckiger zweiter Rahmen (15) ist.

4. Laborautomat nach der Anspruch 2 oder 3, bei dem die Stützeinrichtung (12) mindestens eine Stange (13) oder einen anderen linearen Verbindungsträger umfasst, der oben mit der Trageinrichtung (10) und unten mit der Lagereinrichtung (14) verbunden ist.

5. Laborautomat nach einen der Ansprüche 1 bis 4, bei dem die Arbeitsplätze (3) durch eine Anordnung von ersten Ausrichtelementen (4) begrenzt sind, die ausgebildet sind, eine dazwischen eingesetzte standardisierte Mikrotiterplatte auf dem Arbeitsplatz (3) auszurichten, und der Halter (9.1, 9.2) im unteren Randbereich zweite Ausrichtelemente (23) mit zu den ersten Ausrichtelementen (4) komplementärer Form zur Ausrichtung des Halters (9.1, 9.2) an den ersten Ausrichtelementen (4) aufweist.

6. Laborautomat nach Anspruch 5, bei dem die ersten Ausrichtelemente (4) mehrere erste Stifte (5) und mindestens ein erstes Federelement (6) umfassen, die in den Ecken der Arbeitsplätze (3) vom Arbeitsbereich (2) hochstehen, und die zweiten Ausrichtelemente (23) erste Ausrichtlöcher (24) umfassen, die ausgebildet sind, die ersten Stifte (5) und das erste Federelement (6) aufzunehmen.

7. Laborautomat nach einem der Ansprüche 1 bis 6, bei dem die Trageinrichtung (10) in einem Abstand von der Unterseite des Halters (9.1, 9.2) angeordnet ist, der die Höhe einer Anordnung aus einem Pipettenspitzenhalter (8) mit einem darauf aufgesetzten Pipettenspitzenträger (7) und darin gehaltenen Pipettenspitzen (25) übersteigt.

8. Laborautomat nach Anspruch 7, bei dem der Abstand der Trageinrichtung (10) von der Unterseite des Halters (9.1, 9.2) so bemessen ist, dass in einem auf die Trageinrichtung (10) aufgesetzten Pipettenspitzenträger (7) gehaltene Pipettenspitzen (25) unten oberhalb der Pipettenspitzen (25) in einem auf einen Pipettenspitzenhalter (8) aufgesetzten Pipettenspitzenträger (7) enden.

9. Laborautomat nach einem der Ansprüche 3 bis 8, bei dem der erste Rahmen (11) des Halters (9.1, 9.2) an den Innenseiten von mindestens zwei parallelen Rahmenteilen bezüglich der Oberseite des ersten Rahmens (11) nach unten versetzte, die Durchgangsöffnung (19) begrenzende Auflageleisten (20) zum Lagern eines Pipettenspitzenträgers (7) oder Pipettenspitzenhalters (8) an zumindest zwei parallelen Rändern aufweist.

10. Laborautomat nach einem der Ansprüche 3 bis 9, bei dem der erste Rahmen (11) des Halters (9.1, 9.2) an dem äußeren Rand mindestens eines Rahmenteiles (26) eine Reihe mit Löchern (27) für die Aufnahme von Pipettenspitzen (25) aufweist.

11. Laborautomat nach einem der Ansprüche 1 bis 10, bei dem das Transportwerkzeug ein Greiferwerkzeug (31) ist, das um horizontale Achsen schwenkbare Greifarme (32) mit an einander zugewandten Innenseiten vorstehenden Nadeln (33) aufweist, die mittels der Bewegungsvorrichtung (29) zum Greifen eines Laborartikels zusammenschwenkbar und zum Freigeben eines Laborartikels auseinanderschwenkbar sind.

12. Laborautomat nach einem an der Ansprüche 1 bis 11, der einen vorbestimmten Lagerplatz im Arbeitsbereich (2) für das Transportwerkzeug (31) und einen Adapter (40) mit einem rechteckigen Rohr (43) umfasst, der mit seinem unteren Rand auf dem Lagerplatz aufsetzbar ist, Mittel zum formschlüssigen Verbinden (49) mit dem Transportwerkzeug (31) aufweist und dessen oberer Rand ausgebildet ist, einen Pipettenspitzenträger (7) zu lagern, sodass darin eingesetzte Pipettenspitzen (25) in das Rohr (43) eingreifen.

13. Laborautomat nach Anspruch 12, bei dem der Lagerplatz eine Anordnung von dritten Ausrichtelementen (42) und der Adapter (40) unten vierte Ausrichtelemente mit zu den dritten Ausrichtelementen komplementärer Form zur Ausrichtung des Adapters (40) an den dritten Ausrichtelementen (42) auf dem Lagerplatz aufweist und/oder der Adapter (40) am oberen Rand eine Anordnung von fünften Ausrichtelementen (45) aufweist, die ausgebildet sind, einen Pipettenspitzenträger (7) mit einer Grundfläche entsprechend der Grundfläche einer standardisierten Mikrotiterplatte auf den Adapter (40) auszurichten.

14. Verwendung des Laborautomaten gemäß einem der Ansprüche 1 bis 13 zum automatischen Behandeln von flüssigen Laborproben, bei der
• auf mindestens einem vorbestimmten Arbeitsplatz (3) Pipettenspitzen (25) in einem Pipettenspitzenträger (7) mit einer an die Grundfläche einer standardisierten Mikrotiterplatte angepassten Grundfläche bereitgestellt wird,
• der Halter (9.1, 9.2) mit der Stützeinrichtung (12) neben einem auf einem Arbeitsplatz (3) gelagerten Pipettenspitzenträger (7) auf dem Arbeitsbereich (2) aufgesetzt wird, sodass die Trageinrichtung (10) oberhalb des Pipettenspitzenträgers (7) angeordnet ist,
• auf die Trageinrichtung (10) des Halters (9.1, 9.2) Pipettenspitzen (25) in einem Pipettenspitzenträger (7) mit einer an die Grundfläche einer standardisierten Mikrotiterplatte angepassten Grundfläche bereitgestellt werden,
• mittels des Pipettierwerkzeugs (30) Pipettenspitzen (25) aus dem Pipettenspitzenträger (7) auf der Trageinrichtung (10) entnommen und nach der Übertragung von Flüssigkeit abgegeben werden,
• mittels des Transportwerkzeugs (31) der Pipettenspitzenträger (7) von der Trageinrichtung (10) abgenommen wird, und
• mittels des Pipettierwerkzeugs (30) durch die Durchgangsöffnung (19) der Trageinrichtung (10) hindurch Pipettenspitzen (25) aus einem darunter angeordneten Pipettenspitzenträger (7) entnommen und für die Übertragung von Flüssigkeit verwendet werden.

15. Verwendung nach Anspruch 14, bei den der Pipettenspitzenträger (7) auf den Arbeitsplatz (3) aufgesetzt wird und die darin gehaltenen Pipettenspitzen (25) in eine Vertiefung im Arbeitsplatz (3) eingreifen oder ein Pipettenspitzenträger (7) auf einen Pipettenspitzenhalter (8) aufgesetzt wird und der Pipettenspitzenhalter (8) auf den Arbeitsplatz (3) aufgesetzt wird und/oder bei dem der Pipettenspitzenträger (7) auf die Trageinrichtung (10) aufgesetzt wird oder der Pipettenspitzenträger (7) oben auf einen Pipettenspitzenhalter (8) aufgesetzt und der Pipettenspitzenhalter (8) auf die Trageinrichtung (10) aufgesetzt wird.

16. Verwendung nach Anspruch 14 oder 15, bei dem, wenn auf der Trageinrichtung (10) eines Halters (9.1, 9.2) kein Pipettenspitzenträger (7) gelagert ist, ein Pipettenspitzenträger (7) mittels des Transportwerkzeugs (31) vom Adapter (40) abgenommen und auf der Trageinrichtung (10) des Halters oder einem darauf angeordneten Pipettenspitzenhalter (8) aufgesetzt wird und mittels des Pipettierwerkzeuges (30) Pipettenspitzen (25) von dem Pipettenspitzenträger (7) aufgenommen und für die Übertragung von Flüssigkeit verwendet werden.

## Claims

1. An automated laboratory system for automatically handling laboratory samples, comprising
• a work area (2),
• multiple predefined workstations (3) for laboratory items in the work area (2) that have a format adapted to the footprint of a standardized microtiter plate,
• at least one movement device (29) for moving tools above the work area (2),
• at least one transport tool (31) that can be moved by means of the movement device (29) in order to relocate laboratory items in the work area,
• at least one pipetting tool (30) that can be moved by means of the movement device (29) in order to pick up and release pipette tips (25) and to take up and dispense liquids by means of the pipette tips (25) in the work area (2),
• a holder (9.1, 9.2) for pipette tip carriers (7),
**characterized in that**
• the holder (9.1, 9.2) for pipette tip carriers (7) comprises at least one carrying apparatus (10) having a rectangular through-opening (19) and a support apparatus (12) connected to the carrying apparatus (10),
• wherein the holder (9.1, 9.2) with the support apparatus (12) is placed on the work area (2) next to a pipette tip carrier (7) mounted on a workstation (3), such that the carrying apparatus (10) is arranged above the pipette tip carrier (7), which has a footprint adapted to the footprint of the standardized microtiter plate, pipette tips (25) can be picked up from the pipette tip carrier (7) mounted below the carrying apparatus (10) through the through-opening (19) of the carrying apparatus (10) by means of the pipetting tool (31) and a pipette tip carrier (7) that has a footprint adapted to the footprint of the standardized microtiter plate can be mounted on the carrying apparatus (10), and
• **in that** the automated laboratory system comprises an electronic control apparatus that is connected to the movement device (29) and that is designed to control the movements of the transport tool (31) and of the pipetting tool (30) by means of the movement device (29) such that pipette tips (25) can be picked up from the pipette tip carrier (7) mounted on the carrying apparatus (10) by means of the pipetting tool (30), the pipette tip carrier (7) can be taken off the carrying apparatus (10) by means of the transport tool (31) and pipette tips (25) can be picked up from the pipette tip carrier (7) mounted below the carrying apparatus through the through-opening (19) of the carrying apparatus (10) by means of the pipetting tool (30).

2. The automated laboratory system according to claim 1, wherein the holder (9.1, 9.2) comprises a bearing apparatus (14) via which the support apparatus (12) is supported on the work area (2), wherein the bearing apparatus (14) is designed to receive a pipette tip carrier (7) or pipette tip holder (8) that has a footprint adapted to the footprint of a standardized microtiter plate in a rectangular receiving opening (22) or to support said pipette tip carrier or pipette tip holder on the edge.

3. The automated laboratory system according to claim 1 or 2, wherein the carrying apparatus (10) is a rectangular first frame (11) and the bearing apparatus (14) is a rectangular second frame (15).

4. The automated laboratory system according to claim 2 or 3, wherein the support apparatus (12) comprises at least one rod (13) or other linear connecting bar that is connected at the top to the carrying apparatus (10) and at the bottom to the bearing apparatus (14).

5. The automated laboratory system according to any one of claims 1 to 4, wherein the workstations (3) are an arrangement of first aligning elements (4) that are designed to align a standardized microtiter plate inserted in between on the workstation (3), and the holder (9.1, 9.2) comprises, in the lower edge region, second aligning elements (23) having a complementary shape to the first aligning elements (4) for aligning the holder (9.1, 9.2) with the first aligning elements (4).

6. The automated laboratory system according to claim 5, wherein the first aligning elements (4) comprise multiple first pins (5) and at least one first spring element (6), which point up from the work area (2) in the corners of the workstations (3), and the second aligning elements (23) comprise first aligning holes (24) designed to receive the first pins (5) and the first spring element (6).

7. The automated laboratory system according to any one of claims 1 to 6, wherein the carrying apparatus (10) is arranged at a distance from the bottom side of the holder (9.1, 9.2) that exceeds the height of an arrangement consisting of a pipette tip holder (8) with a pipette tip carrier (7) placed thereon and pipette tips (25) held in the pipette tip carrier.

8. The automated laboratory system according to claim 7, wherein the distance between the carrying apparatus (10) and the bottom side of the holder (9.1, 9.2) is such that pipette tips (25) held in a pipette tip carrier (7) placed on the carrying apparatus (10) end at the bottom above the pipette tips (25) in a pipette tip carrier (7) placed on a pipette tip holder (8).

9. The automated laboratory system according to any one of claims 3 to 8, wherein, on the inner sides of at least two parallel frame parts, the first frame (11) of the holder (9.1, 9.2) comprises rest ledges (20) that are offset downward with respect to the top side of the first frame (11) and that delimit the through-opening (19) for mounting a pipette tip carrier (7) or pipette tip holder (8) on at least two parallel edges.

10. The automated laboratory system according to any one of claims 3 to 9, wherein the first frame (11) of the holder (9.1, 9.2) comprises a row of holes (27) for receiving pipette tips (25) on the outer edge of at least one frame part (26).

11. The automated laboratory system according to any one of claims 1 to 10, wherein the transport tool is a gripper tool (31) that comprises gripping arms (32) that can pivot about a horizontal axis, that comprise needles (33) projecting on mutually facing inner sides and that can be pivoted together by means of the movement device (29) in order to grip a laboratory item and pivoted apart in order to release a laboratory item.

12. The automated laboratory system according to any one of claims 1 to 11, which comprises predefined storage place in the work area (2) for the transport tool (31) and an adapter (40) having a rectangular tube (43) that can be placed on the storage place by its lower edge, having means for positive connection (49) to the transport tool (31), and the upper edge of which is designed to bear a pipette tip carrier (7) such that pipette tips (25) inserted therein reach into the tube (43).

13. The automated laboratory system according to claim 12, wherein the storage place comprises an arrangement of third aligning elements (42) and the adapter (40) comprises fourth aligning elements at the bottom that have a complementary shape to the third aligning elements for aligning the adapter (40) with the third aligning elements (42) on the storage place and/or the adapter (40) comprises an arrangement of fifth aligning elements (45) on the upper edge that are designed to align a pipette tip carrier (7) having a footprint adapted to the footprint of a standardized microtiter plate on the adapter (40).

14. A use of an automated laboratory system according to any one of claims 1 to 13 for automatically handling liquid laboratory samples, wherein
• pipette tips (25) in a pipette tip carrier (7) having a footprint adapted to the footprint of a standardized microtiter plate are provided on a predefined workstation (3),
• the holder (9.1, 9.2) with the support apparatus (12) is placed next to a pipette tip carrier (7) mounted on a workstation (3) on the work area (2) such that the carrying apparatus (10) is arranged above the pipette tip carrier (7),
• pipette tips (25) in a pipette tip carrier (7) having a footprint adapted to the footprint of a standardized microtiter plate are provided on the carrying apparatus (10) of the holder (9.1, 9.2),
• pipette tips (25) are taken out of the pipette tip carrier (7) on the carrying apparatus (10) by means of the pipetting tool (30) and released thereby after liquid has been transferred,
• the pipette tip carrier (7) is taken off the carrying apparatus (10) by means of the transport tool (31), and
• pipette tips (25) are taken out of a pipette tip carrier (7) arranged below the carrying apparatus through the through-opening (19) of the carrying apparatus (10) by means of the pipetting tool (30) and are used to transfer liquid.

15. The use according to claim 14, wherein the pipette tip carrier (7) is placed on the workstation (3) and the pipette tips (25) held therein reach into a recess in the workstation (3) or a pipette tip carrier (7) is placed on a pipette tip holder (8) and the pipette tip holder (8) is placed on the workstation (3) and/or wherein the pipette tip carrier (7) is placed on the carrying apparatus (10) or the pipette tip carrier (7) is placed on top on a pipette tip holder (8) and the pipette tip holder (8) is placed on the carrying apparatus (10).

16. The use according to claim 14 or 15, wherein, if no pipette tip carrier (7) is arranged on the carrying apparatus (10) of a holder (9.1, 9.2), a pipette tip carrier (7) is taken off the adapter (40) by means of the transport tool (31) and placed on the carrying apparatus (10) of the holder or a pipette tip holder (8) arranged thereon and pipette tips (25) are picked up from the pipette tip carrier (7) by means of the pipetting tool (30) and used to transfer liquid.

## Revendications

1. Appareil automatique de laboratoire destiné au traitement automatique d'échantillons de laboratoire, comportant
• une zone de travail (2),
• plusieurs postes de travail (3) prédéfinis pour des articles de laboratoire dans la zone de travail (2), lesquels présentent un format adapté à la surface de base d'une plaque de micro-titrage standardisée,
• au moins un système de déplacement (29) pour le déplacement d'instruments au-dessus de la zone de travail (2),
• au moins un instrument de transport (31) apte à être déplacé au moyen du système de déplacement (29) pour transférer des articles de laboratoire dans la zone de travail,
• au moins un instrument de pipetage (30) apte à être déplacé au moyen du système de déplacement (29) pour recevoir et distribuer des pointes de pipette (25) dans la zone de travail (2) et pour recevoir et distribuer des liquides au moyen des pointes de pipette (25),
• un élément de maintien (9.1, 9.2) pour des supports de pointes de pipette (7),
**caractérisé en ce que**
• l'élément de maintien (9.1, 9.2) pour supports de pointes de pipette (7) comporte au moins un dispositif porteur (10) avec une ouverture de passage rectangulaire (19) et un dispositif d'appui (12) relié au dispositif porteur (10),
• l'élément de maintien (9.1, 9.2) étant placé avec le dispositif d'appui (12) sur la zone de travail (2) à côté d'un support de pointe de pipette (7) monté sur un poste de travail (3), de sorte que le dispositif porteur (10) est disposé au-dessus du support de pointe de pipette (7) présentant une surface de base adaptée à la surface de base de la plaque de micro-titrage standardisée, que des pointes de pipette (25) peuvent être reçues à travers l'ouverture de passage (19) du dispositif porteur (10) au moyen de l'instrument de pipetage (31) par le support de pointe de pipette (7) monté sous le dispositif porteur (10) et qu'un support de pointe de pipette (7) présentant une surface de base adaptée à la surface de base de la plaque de micro-titrage standardisée peut être monté sur le dispositif porteur (10), et
• **en ce que** l'appareil automatique de laboratoire comporte un dispositif de commande électronique, lequel est relié au système de déplacement (29) et conçu pour commander les déplacements de l'instrument de transport (31) et de l'instrument de pipetage (30) au moyen du système de déplacement (29), de telle façon que des pointes de pipette (25) peuvent être reçues par le support de pointe de pipette (7) monté sur le dispositif porteur (10) au moyen de l'instrument de pipetage (30), que le support de pointe de pipette (7) peut être retiré du dispositif porteur (10) au moyen de l'instrument de transport (31) et que des pointes de pipette (25) peuvent être reçues à travers l'ouverture de passage (19) du dispositif porteur (10), au moyen de l'instrument de pipetage (30), par le support de pointe de pipette (7) monté en dessous.

2. Appareil automatique de laboratoire selon la revendication 1, dans lequel l'élément de maintien (9.1, 9.2) présente un dispositif de palier (14) par le biais duquel le dispositif d'appui (12) s'appuie sur la zone de travail (2), dans lequel le dispositif de palier (14) est conçu pour recevoir dans une ouverture de logement rectangulaire (22) ou pour supporter par le bord un support de pointe de pipette (7) ou un élément de maintien de pointe de pipette (8) présentant une surface de base adaptée à la surface de base d'une plaque de micro-titrage standardisée.

3. Appareil automatique de laboratoire selon la revendication 1 ou 2, dans lequel le dispositif porteur (10) est un premier cadre rectangulaire (11) et le dispositif de palier (14) est un deuxième cadre rectangulaire (15).

4. Appareil automatique de laboratoire selon la revendication 2 ou 3, dans lequel le dispositif d'appui (12) comporte au moins une barre (13) ou un autre longeron linéaire, laquelle/lequel est relié(e) au dispositif porteur (10) sur le haut et au dispositif de palier (14) sur le bas.

5. Appareil automatique de laboratoire selon l'une des revendications 1 à 4, dans lequel les postes de travail (3) sont délimités par un ensemble de premiers éléments d'orientation (4), lesquels sont conçus pour orienter une plaque de micro-titrage standardisée insérée entre ceux-ci sur le poste de travail (3), et l'élément de maintien (9.1, 9.2) présente des deuxièmes éléments d'orientation (23) dans la région de bord inférieure, lesquels présentent une forme complémentaire à celle des premiers éléments d'orientation (4) pour l'orientation de l'élément de maintien (9.1, 9.2) sur les premiers éléments d'orientation (4).

6. Appareil automatique de laboratoire selon la revendication 5, dans lequel les premiers éléments d'orientation (4) comportent plusieurs premières tiges (5) et au moins un premier élément de ressort (6), lesquels font saillie au-delà de la zone de travail (2) dans les coins des postes de travail (3), et les deuxièmes éléments d'orientation (23) comportent des premiers trous d'orientation (24) conçus pour recevoir les premières tiges (5) et le premier élément de ressort (6).

7. Appareil automatique de laboratoire selon l'une des revendications 1 à 6, dans lequel le dispositif porteur (10) est disposé à une distance du côté inférieur de l'élément de maintien (9.1, 9.2), laquelle dépasse la hauteur d'un ensemble composé d'un élément de maintien de pointe de pipette (8) avec un support de pointe de pipette (7) placé sur celui-ci et de pointes de pipette (25) maintenues dans celui-ci.

8. Appareil automatique de laboratoire selon la revendication 7, dans lequel la distance entre le dispositif porteur (10) et le côté inférieur de l'élément de maintien (9.1, 9.2) est mesurée de telle façon que des pointes de pipette (25) maintenues dans un support de pointe de pipette (7) placé sur le dispositif porteur (10) se terminent dans un support de pointe de pipette (7) placé sur un élément de maintien de pointe de pipette (8) sur le bas au-dessus des pointes de pipette (25).

9. Appareil automatique de laboratoire selon l'une des revendications 3 à 8, dans lequel, sur les côtés intérieurs d'au moins deux parties de cadre parallèles, le premier cadre (11) de l'élément de maintien (9.1, 9.2) présente des baguettes de soutien (20) décalées vers le bas par rapport au côté supérieur du premier cadre (11) et délimitant l'ouverture de passage (19), pour le soutien d'un support de pointe de pipette (7) ou d'un élément de maintien de pointe de pipette (8) sur au moins deux bords parallèles.

10. Appareil automatique de laboratoire selon l'une des revendications 3 à 9, dans lequel, sur le bord extérieur d'au moins une partie de cadre (26), le premier cadre (11) de l'élément de maintien (9.1, 9.2) présente une rangée avec des trous (27) pour la réception de pointes de pipette (25).

11. Appareil automatique de laboratoire selon l'une des revendications 1 à 10, dans lequel l'instrument de transport est un instrument de préhension (31) présentant des bras de préhension (32) aptes à pivoter autour d'axes horizontaux avec des aiguilles (33) faisant saillie sur des côtés intérieurs en vis-à-vis, lesquels peuvent pivoter l'un vers l'autre pour saisir un article de laboratoire et pivoter l'un à distance de l'autre pour la libération d'un article de laboratoire, au moyen du système de déplacement (29).

12. Appareil automatique de laboratoire selon l'une des revendications 1 à 11, comportant un emplacement de stockage prédéfini dans la zone de travail (2) pour l'instrument de transport (31) et un adaptateur (40) avec un tuyau rectangulaire (43), lequel peut être placé sur l'emplacement de stockage avec son bord inférieur, présentant des moyens pour l'assemblage par complémentarité de forme (49) avec l'instrument de transport (31) et dont le bord supérieur est conçu pour stocker un support de pointe de pipette (7) de manière à ce que des pointes de pipette (25) insérées dans celui-ci s'engagent dans le tuyau (43).

13. Appareil automatique de laboratoire selon la revendication 12, dans lequel l'emplacement de stockage présente un ensemble de troisièmes éléments d'orientation (42) et l'adaptateur (40) présente des quatrièmes éléments d'orientation sur le bas avec une forme complémentaire à celle des troisièmes éléments d'orientation pour l'orientation de l'adaptateur (40) sur les troisièmes éléments d'orientation (42) sur l'emplacement de stockage, et/ou dans lequel l'adaptateur (40) présente un ensemble de cinquièmes éléments d'orientation (45) sur le bord supérieur, lesquels sont conçus pour orienter un support de pointe de pipette (7) avec une surface de base correspondant à la surface de base d'une plaque de micro-titrage standardisée sur l'adaptateur (40).

14. Utilisation de l'appareil automatique de laboratoire selon l'une des revendications 1 à 13 pour le traitement automatique d'échantillons de laboratoire liquides, dans laquelle
• sur au moins un poste de travail (3) prédéfini, des pointes de pipette (25) sont mises à disposition dans un support de pointe de pipette (7) avec une surface de base adaptée à la surface de base d'une plaque de micro-titrage standardisée,
• l'élément de maintien (9.1, 9.2) est placé avec le dispositif d'appui (12) sur la zone de travail (2) à côté d'un support de pointe de pipette (7) monté sur un poste de travail (3), de telle façon que le dispositif porteur (10) est disposé au-dessus du support de pointe de pipette (7),
• des pointes de pipette (25) avec une surface de base adaptée à la surface de base d'une plaque de micro-titrage standardisée sont mises à disposition dans un support de pointe de pipette (7) sur le dispositif porteur (10) de l'élément de maintien (9.1, 9.2),
• des pointes de pipette (25) sont retirées du support de pointe de pipette (7) sur le dispositif porteur (10) au moyen de l'instrument de pipetage (30) et distribuées après le transfert de liquide,
• le support de pointe de pipette (7) est retiré du dispositif porteur (10) au moyen de l'instrument de transport (31), et
• des pointes de pipette (25) sont retirées d'un support de pointe de pipette (7) disposé en dessous, à travers l'ouverture de passage (19) du dispositif porteur (10), au moyen de l'instrument de pipetage (30) et utilisées pour le transfert de liquide.

15. Utilisation selon la revendication 14, dans laquelle le support de pointe de pipette (7) est placé sur le poste de travail (3) et les pointes de pipette (25) maintenues dans celui-ci s'engagent dans un renfoncement dans le poste de travail (3), ou un support de pointe de pipette (7) est placé sur un élément de maintien de pointe de pipette (8) et l'élément de maintien de pointe de pipette (8) est placé sur le poste de travail (3), et/ou dans laquelle le support de pointe de pipette (7) est placé sur le dispositif porteur (10) ou le support de pointe de pipette (7) est placé sur un élément de maintien de pointe de pipette (8) sur le haut et l'élément de maintien de pointe de pipette (8) est placé sur le dispositif porteur (10).

16. Utilisation selon la revendication 14 ou 15, dans laquelle, lorsqu'aucun support de pointe de pipette (7) n'est monté sur le dispositif porteur (10) d'un élément de maintien (9.1, 9.2), un support de pointe de pipette (7) est retiré de l'adaptateur (40) au moyen de l'instrument de transport (31) et placé sur le dispositif porteur (10) de l'élément de maintien ou sur un élément de maintien de pointe de pipette (8) disposé sur celui-ci, et des pointes de pipette (25) sont reçues par le support de pointe de pipette (7) au moyen de l'instrument de pipetage (30) et utilisées pour le transfert de liquide.
